# EUROPÄISCHE PATENTSCHRIFT

(11) **EP 1 531 444 B1**
(45) Veröffentlichungstag und Bekanntmachung des Hinweises auf die Patenterteilung: **09.01.2008**
(21) Anmeldenummer: 04025713.1
(22) Anmeldetag: 29.10.2004
(51) Int. Cl.: G08G 1/16, B60R 21/01

(54) **Einrichtung zur Erfassung eines sich bewegenden oder nicht bewegenden, mit wenigstens einer Markierung versehenen Objekts**
Apparatus for detecting a moving or not moving object with at least one marker
Appareil pour la détection d'un objet en mouvement ou non avec au moins un marqueur

(30) Priorität: 13.11.2003 DE 10352952
(43) Veröffentlichungstag der Anmeldung: 18.05.2005
(73) Patentinhaber: AUDI AG, 85045 Ingolstadt (DE)
(72) Erfinder: Holzner, Michael, 85080 Gaimersheim (DE); Keck, Frank, 85051 Ingolstadt (DE)
(74) Vertreter: Thielmann, Frank

(56) Entgegenhaltungen:
- EP-A- 1 229 508
- EP-A- 1 344 696
- US-A- 3 868 629
- US-A- 5 973 618

## Beschreibung

Die Erfindung betrifft eine Einrichtung zur Erfassung eines sich bewegenden oder nicht bewegenden, mit mindestens einer Markierung versehenen Objekts mittels einer in einem Kraftfahrzeug angeordneten Erfassungseinrichtung, wobei die Markierung ein ein Funksignal gebendes Sendemittel und die Erfassungseinrichtung ein dieses Signal erfassendes Empfangsmittel aufweist, das mit einer das Signal auswertenden Verarbeitungseinrichtung kommuniziert, über die in Abhängigkeit des Informationsgehalts des Signals ein oder mehrere fahrzeugseitige Drittgegenstände ansteuerbar sind.

Eine Einrichtung, die insbesondere der Erfassung von Radfahrern und Fußgängern im Straßenverkehr dient, ist aus DE 101 37 817 A1 bekannt. Die dort zum Einsatz kommende, von der Person beispielsweise an einem Kleidungsstück getragene Markierung ist als Retroreflektor ausgebildet, der mindestens zwei Lichtwellenlängenbereiche unterschiedlich stark reflektiert. Kraftfahrzeugseitig ist eine Beleuchtungseinrichtung mit mindestens zwei Lichtstrahlern verschiedener Lichtwellenlängenbereiche vorgesehen, um die Markierung zur Objekterfassung anzuleuchten. Über einen Bildsensor und eine Auswerteeinheit wird das Reflexionslicht erfasst und ausgewertet. Die Erkennung einer Markierung basiert auf einem im vom Bildsensor gelieferten Bild entstehenden Muster. Eine Erfassung von sich bewegenden Objekten ist mit diesem System grundsätzlich möglich, jedoch nur bedingt. Denn insbesondere dann, wenn sich im Strahlengang zwischen Lichtquelle und Retroreflektor ein Gegenstand befindet, ist eine Erfassung der Markierung nicht möglich. Darüber hinaus setzt die Markierungserfassung eine hinreichende Reflexion voraus, das heißt, die Retroreflektoren müssen in einer bestimmten Position zu den Lichtquellen stehen, da ansonsten eine Reflexion nicht möglich wäre.

In der Druckschrift DE 202 08 643 U1 ist eine Einrichtung zum aktiven Schutz von Personen, Transportvorrichtungen, Bauwerken und Gegenständen im Straßenverkehr beschrieben, bei der eine elektromagnetische Strahlen sendende Einrichtung als Sender an oder in einem Kraftfahrzeug sowie eine in elektromagnetische Strahlen gewandelte Daten sendende Einrichtung als Sender an der Person, der Transportvorrichtung, dem Bauwerk oder dem Gegenstand sowie mindestens eine die Daten als elektromagnetische Strahlen empfangende Einrichtung als Empfänger am Kraftfahrzeug vorgesehen sind, wobei die Intensität der elektromagnetischen Strahlen der die gewandelten Daten sendenden Einrichtung gemessen wird, woraus Entfernungen bestimmbar sind.

Ein Verfahren zur Ansteuerung einer Motorhaube ist durch EP 1 344 696 A beschrieben. Es ist eine Kontaktsensoreinrichtung vorgesehen, die an der vorderen Stoßstange des Kraftfahrzeugs befestigt ist, welche jede Kollision der Stoßstange 9 detektieren soll. Die Ausgangssignale der Kontaktsensoreinrichtung werden einer elektronischen Steuereinheit übergeben, welche einen Aktuator zur Ansteuerung der Motorhaube genau dann ansteuert, wenn ein Aufprall eines Fußgängers detektiert wurde, wozu ein bidirektionales Fußgänger-Fahrzeug-Kommunikationssystem vorgesehen ist, welches die Anwesenheit eines Fußgängers in der Nachbarschaft des Kraftfahrzeugs detektieren kann. Die Motorhaube wird demnach lediglich nach einer Kollision aufgestellt.

Der Erfindung liegt das Problem zugrunde, eine Einrichtung anzugeben, die demgegenüber verbessert ist.

Zur Lösung dieses Problems ist bei einer Einrichtung der genannten Art erfindungsgemäß vorgesehen, dass auf Basis des Signals über die Verarbeitungseinrichtung die Motorhaube zum Personenschutz kurz vor einem Aufprall aufstellbar ist, wobei die Erfassungseinrichtung oder die Verarbeitungseinrichtung zur Ermittlung des Abstands zum Objekt auf Basis der von dem Sendemittel der Erfassungseinrichtung gegebenen Sendesignal und dem oder den empfangenen Funksignalen ausgebildet ist.

Die erfindungsgemäße Einrichtung sieht eine drahtlose Funkkommunikation zwischen der Markierung und der Erfassungseinrichtung vor, vornehmlich im Radiofrequenzbereich, also vornehmlich im MHz-Bereich. Diese Art der Kommunikation ermöglicht zum einen ein sicheres Erfassen der markierten Objekte, seien sie stehend oder sich bewegend, selbst wenn Drittgegenstände im Weg sind, die eine optische Erfassung, wie sie im Stand der Technik beschrieben ist, verhindern würden. Darüber hinaus bietet diese Art der drahtlosen Kommunikation eine sichere Erfassung weitgehend unabhängig von der Position der Markierung bezüglich der Erfassungseinrichtung, das heißt eine exakte Ausrichtung der Markierung zur Erfassungseinrichtung ist nicht zwingend nötig. Die Markierung kann beispielsweise an alltäglichen Kleidungsstücken oder Accessoires wie Büchertaschen, Rucksäcken, Schuhen etc. oder bei Tieren beispielsweise im Halsband integriert sein. Bei stehenden Objekten kann sie beispielsweise im Falle eines Verkehrsschildes am Schild selbst oder am Mast oder dergleichen angebracht sein. Hier sind keinerlei verwendungsmäßige Grenzen gegeben. Insgesamt lässt die erfindungsgemäße Einrichtung eine sichere Objekterfassung über das im Kraftfahrzeug angeordnete Erfassungsmittel zu, sowohl bei stehendem Kraftfahrzeug als auch bei sich bewegendem Kraftfahrzeug, wobei die Erfassung beispielsweise automatisch bis zu einer maximalen Fahrgeschwindigkeit von 60 km/h möglich ist, bei höheren Geschwindigkeiten schaltet sich das System beispielsweise automatisch ab, wobei dies aber letztlich abhängig von der Reichweite der Funksignale ist.

Die Erfassungseinrichtung oder die Verarbeitungseinrichtung ist zur Ermittlung des Abstands zum Objekt auf Basis der von dem Sendemittel der Erfassungseinrichtung gegebenen Sendesignale und dem oder den empfangenen Funksignalen ausgebildet. Nach dieser Erfindungsausgestaltung ist nicht nur eine Ortsinformation, also eine Richtungsinformation, sondern auch eine Entfernungsinformation erfassbar. Dies kann beispielsweise durch eine Phasenmodulation seitens des Sendesignals, das vom erfassungseinrichtungsseitigen Sendemittel gegeben wird, erfolgen. In diesem Fall erfolgt die Laufzeiterfassung und damit die Abstandsbestimmung anhand der sich ergebenden Phasendifferenz zwischen dem Sendesignal und dem von der Markierung gegebenen Funksignal als Antwort darauf.

Die sichere Erfassung lässt gleichermaßen eine sichere Signal- oder Datenverarbeitung zu, um über die Verarbeitungseinrichtung entsprechende Drittgegenstände steuern zu können. Hier sind verschiedene Steuerungsmöglichkeiten denkbar. Zum einen kann auf Basis des Signals über die Verarbeitungseinrichtung gesteuert eine optische und/oder akustische und/oder haptisch wahrnehmbare Information an den Fahrer ausgebbar sein. Wird beispielsweise ein Objekt erfasst, so werden über die in der Regel integrierten Fahrzeuglautsprecher Warntöne gegeben, beispielsweise auch insoweit ortsaufgelöst, als der Ton über den oder die rechten Lautsprecher gegeben wird, wenn das Objekt am rechten Fahrbahnrand detektiert wird, bzw. über den linken Lautsprecher gegeben wird, wenn das Objekt linksseitig detektiert wird. Auch ist eine optische Warnsignalausgabe über die Armaturentafel, insbesondere über einen dort integrierten Monitor möglich. Gleichermaßen ist auch eine Lenkradvibration zur Gabe eines haptisch wahrnehmbaren Signals zweckmäßig, auch kann eine Vibratoreinheit im Sitz oder dergleichen aktiviert werden.

Alternativ oder zusätzlich zu dieser Signalgabe kann auf Basis des Signals über die Verarbeitungseinrichtung auch der Fahrbetrieb beeinflussbar sein. Denkbar ist die automatische Durchführung einer Notbremsung und/oder die gleichzeitige Zuschaltung der Warnblinkanlage und/oder der Lichthupe oder der Hupe selbst. Auch hier sind unterschiedlichste Kombinationen denkbar.

Erfindungsgemäß ist in Abhängigkeit des Signals über die Verarbeitungseinrichtung gesteuert die Motorhaube aufstellbar, um auf diese Weise im Falle einer Kollision des Kraftfahrzeugs mit einem Fußgänger oder Radfahrer die Personenverletzung sofern irgend möglich zu verringern. Bei einem solchen Personenschutzsystem wird die Motorhaube um ein kurzes Wegstück kurz vor dem eigentlichen Aufprall angestellt, so dass der Aufprall aufgrund der Verlängerung des Weges, um den die Motorhaube nachgibt, etwas abgedämpft wird.

Hinsichtlich der Ausgestaltung der Markierung sind unterschiedliche Möglichkeiten denkbar. Nach einer ersten Erfindungsausgestaltung kann das markierungsseitige Sendemittel als aktives Sendemittel mit einer integrierten Energiequelle ausgebildet sein. Das heißt, in diesem Fall sendet die Markierung das Funksignal eigenständig aus, entweder kontinuierlich oder in relativ kurzen Zeitintervallen intermittierend, beispielsweise alle 2 oder 5 Sekunden etc. Seitens der Erfassungseinrichtung ist in diesem Fall ein reines Empfangsmittel vorgesehen, das ausschließlich zum Signalempfang dient.

Alternativ dazu kann die Markierung auch ein passives Sendemittel mit einem zugeordneten Empfangsmittel sein und die Erfassungseinrichtung ein dem dort vorgesehenen Empfangsmittel zugeordnetes Sendemittel aufweisen, über das die Markierung zur Gabe des Funksignals ansteuerbar ist. Bei dieser Ausgestaltung ist die Markierung als Sender-Empfänger-Kombination ausgestaltet, auch die Erfassungseinrichtung weist eine Sender-Empfänger-Kombination auf. Die Funksignalgabe wird über das Sendemittel der Erfassungseinrichtung angesteuert. Eine Energiequelle ist seitens der Markierung nicht erforderlich, vielmehr erfolgt in diesem Fall die Übertragung der für die kurze Funksignal-Rückantwort erforderlichen Energie über die Ansteuerung über das empfangseinrichtungsseitige Sendemittel.

Die Markierung kann in einer konkreten Erfindungsausgestaltung als Radio-Frequency-Identification-Tag (RFID-Tag) oder als Transponder ausgebildet sein. Prinzipiell ist aber jede Ausführung einer Markierung denkbar, solange eine sichere Funksignalgabe sichergestellt ist. Selbstverständlich wird sich die Ausführung der Markierung danach richten, wie sie zu verwenden ist. Im Falle der Anordnung der Markierung an einem Kleidungsstück sollte die Markierung natürlich möglichst klein sein und nicht auftragen, während bei der Anordnung der Markierung beispielsweise an einem Verkehrsschild die Größe und Ausführung der Markierung eine untergeordnete Rolle spielt.

Um nicht nur das Vorhandensein einer Markierung und damit eines Objekts zu erfassen, sondern auch möglichst genaue Informationen über den Ort des Objekts aufnehmen zu können, sieht eine zweckmäßige Erfindungsausgestaltung vor, dass zwei lokal versetzt positionierte Markierungen vorgesehen sind und/oder das Erfassungsmittel zwei lokal versetzt positionierte Empfangsmittel aufweist, wobei das oder die Empfangssignale des einen oder der beiden Empfangsmittel zum Erzeugen einer Ortsinformation bezüglich des Objekts verarbeitbar sind. Durch die lokal versetzte Anordnung der Markierungen und/oder der Empfangsmittel kann die Signalgabe und der Signalempfang auf dem Stereoprinzip erfolgen, was es ermöglicht, bei entsprechender Verarbeitung der Empfangssignale über die Verarbeitungseinrichtung relativ genaue Kenntnis über die lokale Position des Objekts zu erhalten, was im Hinblick auf die Ansteuerung des oder der Drittgegenstände von Vorteil sein kann.

Prinzipiell ist es möglich, über das Funksignal lediglich mitzuteilen, dass ein Objekt im Erfassungsbereich der Erfassungseinrichtung ist. Zweckmäßig ist es jedoch, wenn das Funksignal wenigstens eine objektspezifische Information, insbesondere über die Art des Objekts enthält. Das heißt, dem Funksignal ist eine Information aufgeprägt, z.B. über die Art des Objekts (Person, Straßenschild etc.), gegebenenfalls auch über die Größe und dem Umriss und dergleichen, also Informationen, die im Hinblick auf die Reaktion, die seitens der Verarbeitungseinrichtung auf das Funksignal erfolgt, zweckmäßig sind. Beispielsweise ist es sehr zweckmäßig, schon frühzeitig zu wissen, ob es sich bei dem Objekt um ein sich bewegendes Objekt, also beispielsweise einen Fußgänger handelt, da dann die Ansteuerung des Hubmechanismus für die Motorhaube im Bedarfsfall vonnöten ist, worauf sich das gesamte System frühzeitig einstellen kann. Bei der Erfassung eines stehenden Objekts, z.B. eines Verkehrsschilds oder einer Mülltonne, muss sich das System hierauf beispielsweise nicht einstellen. Hierüber kann vorteilhaft auch eine etwaige Fehlauslösung des Fußgängerschutzsystems, also der Motorhaubenanstellung, vermieden werden.

Schließlich kann eine weitere Sendeeinrichtung zum Übertragen von aus der Verarbeitung des Funksignals oder der Funksignale gewonnenen Informationen an andere Fahrzeuge, die beispielsweise rückwärtig folgen, vorgesehen sein. Es erfolgt also eine Weiterleitung der erfassten Informationen, so dass sich nachfolgende Schutzsysteme oder Informationssysteme anderer Kraftfahrzeuge auf die Situation einstellen können. Zweckmäßig ist natürlich ferner, wenn eine weitere Empfangseinrichtung zum Empfangen von einem anderen Fahrzeug gegebenen, entsprechende Informationen enthaltenden Signalen vorgesehen ist, um auch das eigene Kraftfahrzeug in die Lage zu versetzen, von extern eingehenden, der Sicherheit dienenden Informationen zu empfangen und zu verarbeiten.

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: eine Prinzipdarstellung einer Einrichtung einer ersten Ausführungsform,
- Fig. 2: eine bei der Einrichtung gemäß Fig. 1 verwendbare Erfassungseinrichtung nebst Markierung,
- Fig. 3: eine weitere Ausführungsform einer bei der Einrichtung aus Fig. 1 verwendbaren Erfassungseinrichtung nebst Markierung, und
- Fig. 4: eine weitere erfindungsgemäße Ausführungsform einer Einrichtung.

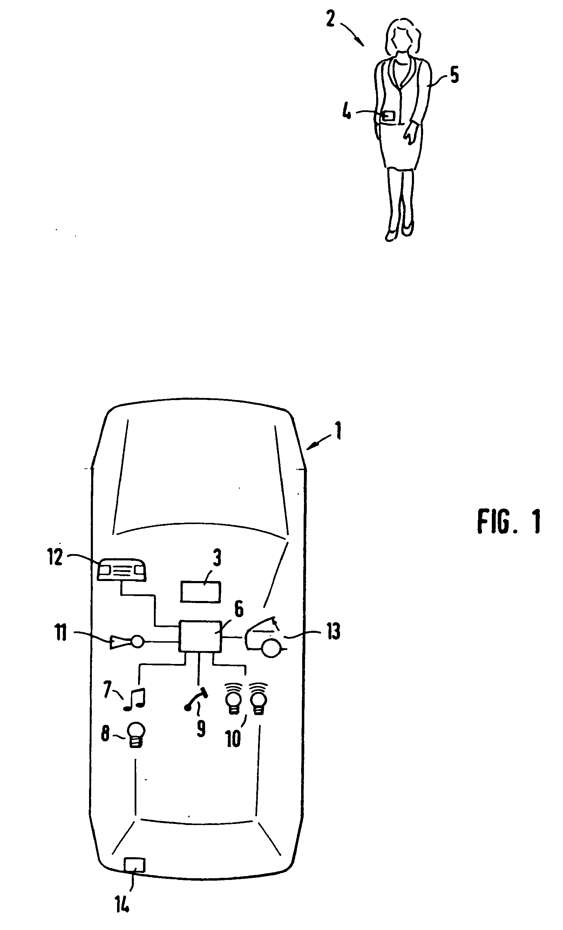

Fig. 1 zeigt eine erfindungsgemäße Einrichtung zur Erfassung eines sich bewegenden und unbewegenden Objekts in Form einer Prinzipskizze. Gezeigt ist ein Kraftfahrzeug 1 sowie ein Objekt 2, hier ein Fußgänger. Das Kraftfahrzeug weist eine Erfassungseinrichtung 3 auf, die zur Erfassung einer Markierung 4, die im gezeigten Beispiel an einem Kleidungsstück der Person angeordnet ist, dient. Dies erfolgt auf Basis eines von der Markierung 4 ausgesandten Funksignals, das über geeignete Empfangsmittel seitens der Erfassungseinrichtung 3 empfangen und in einer nachgeschalteten Verarbeitungseinrichtung 6 verarbeitet wird. Hierüber wird das Vorhandensein eines Objekts, hier also der Person, erfasst, wie auch gegebenenfalls weitere Informationen über die konkrete lokale Position, den Abstand des Kraftfahrzeugs 1 zum Objekt 2 wie auch gegebenenfalls der Objektart, sofern das gegebene Funksignal diesbezüglich Informationen enthält, gewonnen und aufbereitet werden können. Die Verarbeitungseinrichtung 6 steuert abhängig vom Erfassungsergebnis ein oder mehrere Drittgegenstände. Denkbar ist z.B. die Ausgabe eines akustischen oder optischen Warnsignals, wie durch die beiden Symbole 7 und 8 dargestellt ist. Denkbar ist auch die Durchführung einer Notbremsung, wie durch das Symbol 9 gezeigt ist, wie auch die Ansteuerung der Warnblinkanlage, wie das Symbol 10 darstellt. Auch das Einschalten der Hupe zur Warnung der Person ist denkbar, wie das Symbol 11 zeigt. Die Möglichkeit, die Lichthupe zu betätigen, wie durch das Symbol 12 dargestellt, dient ebenfalls zur Warnung des Objekts selbst. Schließlich besteht noch die Möglichkeit, die Motorhaube anzustellen, um einen etwaigen Personenaufprall zu dämpfen, wie durch das Symbol 13 dargestellt ist. Sämtliche auswertungsabhängigen Aktionen dienen dazu, entweder den Fahrer über das Vorhandensein des Objekts zu warnen, oder aber unmittelbar in den Fahrbetrieb einzugreifen bzw. rückwärtige Fahrzeuge ebenfalls in Kenntnis zu setzen.

Gezeigt ist ferner ein am Fahrzeugheck vorgesehenes weiteres Sendemittel 14, das zur Übertragung der über die Verarbeitungseinrichtung 6 gewonnenen Information an andere Kraftfahrzeuge dient, die über ein entsprechendes Empfangsmittel verfügen, das diese Informationen empfangen und nachfolgend verarbeiten kann. Das Kraftfahrzeug 1 selbst kann beispielsweise solche von anderen Kraftfahrzeugen gegebene Informationen über die Erfassungseinrichtung 3 empfangen und verarbeiten.

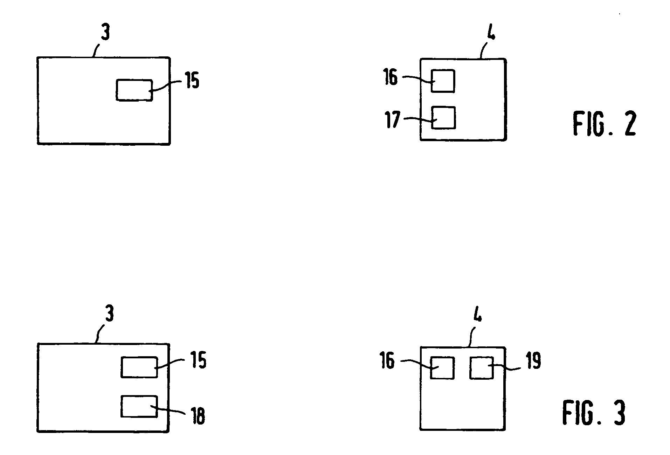

Fig. 2 zeigt eine erste Erfindungsausgestaltung einer Erfassungseinrichtung 3. Diese umfasst ein Empfangsmittel 15, also einen Funksignalempfänger. Die Markierung 4 ihrerseits weist ein Sendemittel 16 sowie eine integrierte Energiequelle oder Leistungsversorgung 17 auf, über die das Sendemittel 16 versorgt wird. Über das Sendemittel wird beispielsweise kontinuierlich oder im kurzen Sekundenabstand intermittierend das Funksignal ausgegeben, das vom sich nähernden Kraftfahrzeug 1 erfasst wird, wenn es in Reichweite des Signals kommt. Über das Empfangsmittel 15 wird die Signalinformation an die Verarbeitungseinrichtung 6 gegeben, wo sie wie beschrieben verarbeitet wird. Bei der Markierung 4 handelt es sich bei dieser Ausführungsform um einen aktiven Sender, der also aktiv den Sendebetrieb steuert.

Fig. 3 zeigt eine weitere Ausführungsform einer Erfassungseinrichtung 3. Diese verfügt über ein Empfangsmittel 15, zusätzlich aber auch über ein Sendemittel 18. Die Markierung 4 verfügt auch hier über ein Sendemittel 16, zusätzlich aber auch über ein Empfangsmittel 19. Bei der Markierung 4 handelt es sich in diesem Fall um einen passiven Sender. Über das Sendemittel 18 wird kontinuierlich oder intermittierend ein Funksignal ausgesendet. Befindet sich eine Markierung 4 in Signalreichweite, so wird das Funksignal vom Empfangsmittel 19 empfangen und hierüber der Betrieb des Sendemittels 16 zur Gabe eines Antwort-Funksignals angestoßen. Das Antwort-Funksignal wird wiederum vom Empfangsmittel 15 der Erfassungseinrichtung 3 aufgenommen und entsprechend weitergeleitet. Bei der Markierung 4 handelt es sich hier also um einen passiven Sender, dessen Sendebetrieb erst bei Empfang eines vom Kraftfahrzeug gegebenen Signals angestoßen wird. Die Integration einer Energiequelle ist hier nicht erforderlich, da die für den Sendebetrieb erforderliche Leistung über das von der Erfassungseinrichtung gegebene Signal übertragen werden kann. Selbstverständlich kann gleichwohl auch hier eine Leistungsversorgung integriert sein. Der Betrieb der Markierung kann dann derart sein, dass der Sendebetrieb nur dann erfolgt, wenn vorher ein vom kraftfahrzeugseitigen Sendemittel 18 gegebenes Signal empfangen wird, das heißt es erfolgt kein kontinuierlicher oder kontinuierlichintermittierender Betrieb. Vielmehr wird nur dann ein Signal gegeben, wenn sich ein Kraftfahrzeug tatsächlich nähert.

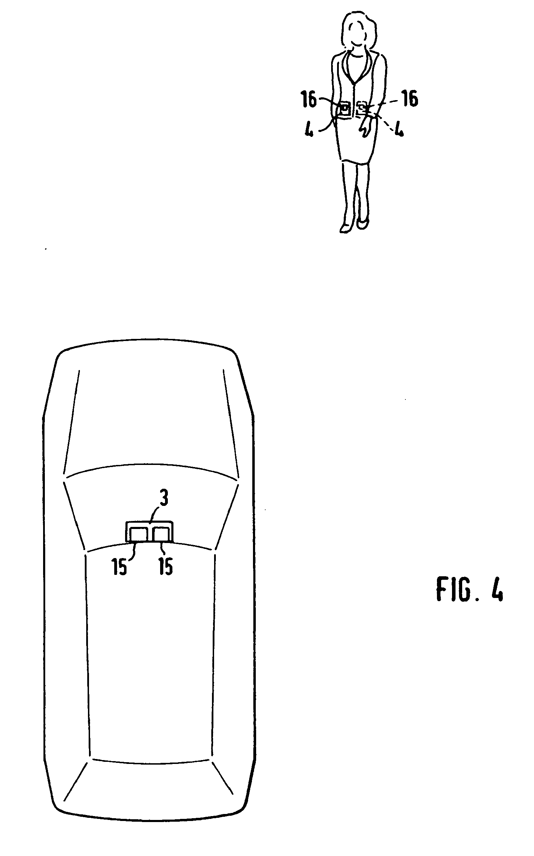

Um eine möglichst detaillierte Ortsinformation bezüglich des Objekt zu bekommen, kann, wie Fig. 4 zeigt, die Erfassungseinrichtung 3 zwei separate, lokal versetzte Empfangsmittel 15 aufweisen, denen - sofern ein solches je nach Ausführung vorgesehen ist - ein gemeinsames Sendemittel zugeordnet sein kann. Hierüber kann ein von der Markierung 4 gegebenes Funksignal lokal versetzt aufgenommen werden und basierend auf den beiden Empfangsergebnissen eine lokale Position bestimmt werden.

Zusätzlich oder alternativ dazu ist es denkbar, dass am Objekt zwei Markierungen 4 vorgesehen sind, so dass lokal versetzt Funksignale gegeben werden. In diesem Fall besteht natürlich die Möglichkeit, seitens der Erfassungseinrichtung nur ein Empfangsmittel vorzusehen, im Endeffekt werden auch hier zwei unterschiedlich lokale Signalpositionen erfasst. Natürlich ist es auch denkbar, beide Sendemittel der Markierungen in einer gemeinsamen Markierung beabstandet zu integrieren.

Neben der Möglichkeit der Erfassung von Ortsinformationen besteht wie bereits beschrieben die Möglichkeit, zusätzliche Informationen über das Funksignal zu erfassen, wie beispielsweise solche betreffend die Art des Gegenstands, an dem die Markierung angeordnet ist, ob es sich also um ein Kleidungsstück handelt, das grundsätzlich von einem sich bewegen Objekt getragen wird, ob sich die Markierung beispielsweise an einer Büchertasche, einem Schulranzen, einem Rucksack oder dergleichen befindet, was ebenfalls auf ein sich bewegendes Objekt schließen lässt, oder ob die Markierung beispielsweise an einem Schildmasten eines Verkehrsschildes angeordnet ist. Auch kann das übertragene Funksignal Informationen über die Größe oder den Umriss des Objekts enthalten etc. Denkbar sind alle möglichen Informationen, die in irgendeiner Weise für die weitere Verarbeitung und insbesondere Ansteuerung der relevanten fahrzeugseitigen Drittgegenstände von Vorteil sind.

Weiterhin kann das Erfassungsmittel oder aber die Verarbeitungseinrichtung zur Bestimmung des Abstands des Kraftfahrzeugs zum Objekt ausgebildet sein. Dies kann durch Auswertung etwaigen Phasendifferenzen zwischen dem von der kraftfahrzeugseitigen Einrichtung gegebenen Sendesignal (in diesem Fall ist dort ein Sendemittel integriert) und dem Antwort-Funksignal, von der Markierung kommend, erfolgen.

Insgesamt bietet die erfindungsgemäße Einrichtung eine Möglichkeit, etwaige Gegenstände sicher erfassen und etwaige Handlungen basierend auf der Erfassung ausführen zu können.

## Patentansprüche

1. Einrichtung zur Erfassung eines sich bewegenden oder nicht bewegenden, mit wenigstens einer Markierung versehenen Objekts mittels einer in einem Kraftfahrzeug angeordneten Erfassungseinrichtung, wobei die Markierung ein ein Funksignal gebendes Sendemittel und die Erfassungseinrichtung ein dieses Signal erfassendes Empfangsmittel aufweist, das mit einer das Signal auswertenden Verarbeitungseinrichtung kommuniziert, über die in Abhängigkeit des Informationsgehalts des Signals ein oder mehrere fahrzeugseitige Drittgegenstände ansteuerbar sind,
**dadurch gekennzeichnet,**
**dass** auf Basis des Signals über die Verarbeitungseinrichtung (6) die Motorhaube (13) zum Personenschutz kurz vor einem Aufprall aufstellbar ist, wobei die Erfassungseinrichtung (3) oder die Verarbeitungsseinrichtung (6) zur Ermittlung des Abstands zum Objekt (2) auf Basis der von dem Sendemittel (18) der Erfassungseinrichtung (3) gegebenen Sendesignale und dem oder den empfangenen Funksignalen ausgebildet ist.

2. Einrichtung nach Anspruch 1,
**dadurch gekennzeichnet,**
**dass** das markierungsseitige Sendemittel (16) ein aktives Sendemittel mit einer integrierten oder zugeordneten Energiequelle (17) ist.

3. Einrichtung nach Anspruch 1,
**dadurch gekennzeichnet,**
**dass** die Markierung (4) ein passives Sendemittel (16) mit zugeordnetem Empfangsmittel (19) ist und die Erfassungseinrichtung (3) ein dem Empfangsmittel (15) zugeordnetes Sendemittel (18) aufweist, über das die Markierung (4) zur Gabe des Funksignals ansteuerbar ist.

4. Einrichtung nach einem der vorangehenden Ansprüche,
**dadurch gekennzeichnet,**
**dass** die Markierung (4) als Radio-Frequency-Identification-Tag oder als Transponder ausgebildet ist.

5. Einrichtung nach einem der vorangehenden Ansprüche,
**dadurch gekennzeichnet,**
**dass** zwei lokal versetzt positionierte Markierungen (4) vorgesehen sind oder eine Markierung (4) zwei lokal versetzt angeordnete Sendemittel (16) aufweist und/oder das Erfassungsmittel (3) zwei lokal versetzt positionierte Empfangsmittel (15) aufweist, wobei das oder die Empfangssignale des einen oder der beiden Empfangsmittel (15) zur Erzeugung einer Ortsinformation bezüglich des Objekts (2) verarbeitbar sind.

6. Einrichtung nach einem der vorangehenden Ansprüche,
**dadurch gekennzeichnet,**
**dass** das Funksignal eine objektspezifische Information, insbesondere über die Art des Objekts (2) enthält.

7. Einrichtung nach einem der vorangehenden Ansprüche,
**dadurch gekennzeichnet,**
**dass** auf Basis des Signals über die Verarbeitungseinrichtung (6) gesteuert eine optische und/oder akustische und/oder haptisch wahrnehmbare Information (7, 8) an den Fahrer ausgebbar ist.

8. Einrichtung nach einem der vorangehenden Ansprüche,
**dadurch gekennzeichnet,**
**dass** auf Basis des Signals über die Verarbeitungseinrichtung (6) der Fahrbetrieb (9, 10, 11, 12) beeinflussbar ist.

9. Einrichtung nach einem der vorangehenden Ansprüche,
**dadurch gekennzeichnet,**
**dass** eine weitere Sendeeinrichtung (14) zum Übertragen von aus der Verarbeitung des Funksignals gewonnenen Informationen an andere Fahrzeuge vorgesehen ist.

10. Einrichtung nach Anspruch 9
**dadurch gekennzeichnet,**
**dass** eine weitere Empfangseinrichtung zum Empfangen von von einem anderen Fahrzeug gegebenen, entsprechende Informationen enthaltenden Signalen vorgesehen ist.

## Claims

1. Device for detecting a moving or not moving object which is provided with at least one mark, by means of a detection device arranged in a motor vehicle, the mark having sending means which emits a radio signal and the detection device having a receiving means which detects this signal and communicates with a processing device which evaluates this signal, one or a plurality of other articles in or on the vehicle being controllable by way of the processing device in dependence on the information content of the signal, **characterised in that** by way of the processing device (6), on the basis of the signal, the bonnet (13) can be raised for person protection shortly prior to an impact, the detection device (3) or the processing device (6) being constructed to determine the distance to the object (2) on the basis of the sent signals emitted by the sending means (18) of the detection device (3) and the received radio signal or signals.

2. Device according to claim 1, **characterised in that** the sending means (16) in or on the mark is an active sending means having an integrated or associated energy source (17).

3. Device according to claim 1, **characterised in that** the mark (4) is a passive sending means (16) having an associated receiving means (19) and the detection device (3) has a sending means (18) associated with the receiving means (15), by way of which the mark (4) can be controlled to emit the radio signal.

4. Device according to one of the preceding claims, **characterised in that** the mark (4) is constructed as a radio frequency identification tag or as a transponder.

5. Device according to one of the preceding claims, **characterised in that** two marks (4) are provided that are positioned locally offset, or a mark (4) has two sending means (16) that are arranged locally offset, and/or the detection means (3) has two receiving means (15) that are positioned locally offset, whereby the received signal or signals of the one or both receiving means (15) can be processed to produce location information relating to the object (2).

6. Device according to one of the preceding claims, **characterised in that** the radio signal contains information specific to the object, especially about the nature of the object (2).

7. Device according to one of the preceding claims, **characterised in that** information (7, 8) that can be perceived visually and/or acoustically and/or haptically can be emitted to the driver, on the basis of the signal, under the control of the processing device (6).

8. Device according to one of the preceding claims, **characterised in that** the driving operation (9, 10, 11, 12) can be influenced, on the basis of the signal, by way of the processing device (6).

9. Device according to one of the preceding claims, **characterised in that** a further sending device (14) is provided for transmitting to other vehicles information gained from the processing of the radio signal.

10. Device according to claim 9, **characterised in that** a further receiving device is provided for receiving signals emitted by another vehicle, that contain corresponding information.

## Revendications

1. Dispositif de détection d'un objet en mouvement ou non prévu avec au moins un marqueur au moyen d'un dispositif de détection disposé dans un véhicule, moyennant quoi le marqueur comporte un moyen d'envoi émettant un signal radio électrique et le dispositif de détection comporte un moyen de réception détectant ce signal, lequel communique avec un dispositif de traitement analysant le signal, via lequel un ou plusieurs objets tiers du côté du véhicule peuvent être commandés en fonction du contenu des informations du signal, **caractérisé en ce que** le capot (13) peut être placé peu de temps avant un choc de sorte qu'il protège les personnes sur la base du signal via le dispositif de traitement (6), moyennant quoi le dispositif de détection (3) ou le dispositif de traitement (6) est conçu pour déterminer la distance entre l'objet (2) sur la base des signaux d'envoi émis par le moyen d'envoi (18) du dispositif de détection (3) et le ou les signaux radio électriques reçus.

2. Dispositif selon la revendication 1, **caractérisé en ce que** le moyen d'envoi (16) du côté du marqueur est un moyen d'envoi actif avec une source d'énergie (17) intégrée ou affectée.

3. Dispositif selon la revendication 1, **caractérisé en ce que** le marqueur (4) est un moyen d'envoi (16) passif avec un moyen de réception (19) affecté et **en ce que** le dispositif de détection (3) comporte un moyen d'envoi (18) affecté au moyen de réception (15), via lequel le marqueur (4) peut être commandé pour donner le signal radio électrique.

4. Dispositif selon l'une quelconque des revendications précédentes, **caractérisé en ce que** le marqueur (4) est conçu comme balise d'identification par radio-fréquence ou comme transpondeur.

5. Dispositif selon l'une quelconque des revendications précédentes, **caractérisé en ce que** deux marqueurs (4) placés localement en décalé sont prévus ou un marqueur (4) comporte deux moyens d'envoi (16) disposés localement en décalé et/ou le moyen de détection (3) comporte deux moyen de réception (15) positionnés localement en décalé, moyennant quoi le ou les signaux d'un ou des deux moyens de réception (15) peuvent être traités pour générer une information locale relative à l'objet (2).

6. Dispositif selon l'une quelconque des revendications précédentes, **caractérisé en ce que** le signal radio électrique contient une information propre à l'objet, plus particulièrement sur le type d'objet (2).

7. Dispositif selon l'une quelconque des revendications précédentes, **caractérisé en ce qu'**une information (7, 8) perceptible de façon optique et/ou acoustique et/ou haptique peut être transmise au conducteur sur la base du signal via le dispositif de traitement (6).

8. Dispositif selon l'une quelconque des revendications précédentes, **caractérisé en ce que** la conduite du véhicule (9, 10, 11, 12) peut être influencée sur la base du signal via le dispositif de traitement (6).

9. Dispositif selon l'une quelconque des revendications précédentes, **caractérisé en ce qu'**un autre dispositif d'envoi (14) est prévu pour transmettre à partir du traitement du signal radio électrique les informations extraites à d'autres véhicules.

10. Dispositif selon la revendication 9, **caractérisé en ce qu'**un autre dispositif de réception est prévu pour recevoir les signaux contenant les informations correspondantes émises par un autre véhicule.
